# FASCICULE DE BREVET EUROPEEN

(11) **EP 2 731 481 B1**
(45) Date de publication et mention de la délivrance du brevet: **27.05.2015**
(21) Numéro de dépôt: 12744047.7
(22) Date de dépôt: 05.07.2012
(51) Int. Cl.: A47J 36/12, A47J 36/16

(54) **ARTICLE CULINAIRE MUNI D'UNE POIGNEE COOPERANT AVEC UN COUVERCLE**
KÜCHENARTIKEL MIT EINEM MIT EINER HAUBE ZUSAMMENWIRKENDEN HANDGRIFF
KITCHENWARE ITEM PROVIDED WITH A HANDLE COOPERATING WITH A COVER

(30) Priorité: 13.07.2011 FR 1156364
(43) Date de publication de la demande: 21.05.2014
(73) Titulaire: SEB S.A., 69130 Ecully (FR)
(72) Inventeur: BONNEL, Jocelyn, F-73310 Vions (FR)
(74) Mandataire: Bourrières, Patrice
(86) Numéro de dépôt international: PCT/FR2012/051579
(87) Numéro de publication internationale: WO 2013/007929

(56) Documents cités:
- EP-A1- 1 369 072
- US-A1- 2005 184 079
- US-A1- 2006 278 095

## Description

La présente invention concerne un article culinaire destiné à la cuisson d'aliments notamment une poêle, une casserole, une sauteuse, un faitout ou un autocuiseur comportant une poignée et un couvercle. Un article curlinaire de ce type est connu de US 2006/278095.

On connaît du document CH686338 un article culinaire muni d'un couvercle comportant un moteur alimenté par une batterie et un agitateur entrainé en rotation par le moteur pour brasser les aliments. Un tel agencement permet de mécaniser la fonction remuage à l'aide du moteur et de la batterie pour aider l'utilisateur.

Cependant, un article culinaire avec un tel couvercle ne permet pas à l'utilisateur de surveiller facilement la cuisson des aliments. En effet, le couvercle est alourdi par le poids du moteur et de la batterie et par conséquent difficile à manipuler. De plus, le moteur et la batterie créent une excroissance sur la partie supérieure du couvercle qui complique le rangement de l'article culinaire muni du couvercle.

Le but de la présente invention est de remédier aux inconvénients précités et de proposer un article culinaire muni d'un couvercle présentant une ergonomie optimisée pour permettre à l'utilisateur de le manipuler facilement, en toute sécurité.

Un autre but de l'invention est de proposer un article culinaire muni d'un couvercle qui puisse être rangé facilement.

Un autre but de l'invention est de proposer un article culinaire muni d'un couvercle qui soit de conception simple et économique à mettre en oeuvre.

Ces buts sont atteints avec un article culinaire selon la revendication 1 comportant une calotte munie d'une paroi latérale, un couvercle adapté à recouvrir la calotte et une poignée comprenant des moyens de fixation pour la fixer à la paroi latérale, caractérisé en ce que ladite poignée comporte une source d'énergie électrique, un dispositif électromécanique alimenté par la source d'énergie et commandé par des moyens de commande et en ce que le dispositif électromécanique est adapté à entrainer un dispositif d'actionnement qui agit sur le couvercle pour le déplacer

Un tel agencement permet d'obtenir un article culinaire muni d'un couvercle offrant à l'utilisateur des fonctions mécanisées mettant en oeuvre le couvercle. Les composants lourds et volumineux, permettant la mécanisation des fonctions, à savoir la source d'énergie, le dispositif électromécanique et le dispositif d'actionnement sont positionnés dans la poignée. Ceci permet de ne pas alourdir le couvercle et ne pas générer d'excroissances. Ainsi, on conserve un couvercle facile à utiliser et à ranger. De plus, L'agencement des composants lourds dans la poignée permet d'améliorer l'ergonomie en déplaçant le centre de gravité vers la poignée saisie par l'utilisateur.

Avantageusement, le dispositif d'actionnement comporte un levier mobile entre une position de repos dans laquelle le levier est à l'intérieur de la poignée et une position activée dans laquelle le levier fait saillie sur une face supérieure de la poignée pour soulever le couvercle posé sur la calotte et, ainsi, régler le débit de vapeur lorsque des aliments sont chauffés dans la calotte.

Cette disposition permet de mécaniser la fonction échappement de la vapeur. L'utilisateur peut facilement, à l'aide des moyens de commande disposés sur la poignée, régler l'échappement de la vapeur sans toucher le couvercle et ainsi ne pas risquer de se bruler.

De préférence, le levier est formé par une came, mobile en rotation.

Cette disposition permet d'obtenir de manière simple et économique un levier mobile.

Avantageusement, le levier est formé par au moins un piston, mobile en translation.

De préférence, le couvercle comporte une crémaillère annulaire et le dispositif d'actionnement comporte une roue dentée entrainée en rotation par le dispositif électromécanique, ladite roue dentée coopérant avec la crémaillère pour mettre le couvercle en rotation sur la calotte.

Cette disposition permet d'obtenir un couvercle tournant sur la calotte très léger, facile à manipuler et à ranger.

Avantageusement, le couvercle comporte des moyens de remuage ou de broyage des aliments disposés dans la calotte, lesdits moyens de remuage ou de broyage agissant sur les aliments lorsque le couvercle est mis en rotation sur la calotte.

Cette disposition permet de mécaniser la fonction remuage ou broyage des aliments disposés dans la calotte.

De préférence, les moyens de remuage comportent une pale de brassage.

Avantageusement, le dispositif électromécanique comporte un moteur pour entrainer le dispositif d'actionnement.

Cette disposition permet d'obtenir un entrainement du dispositif d'actionnement très économique.

De préférence, la source d'énergie électrique est une source d'énergie électrique rechargeable, adaptée à être rechargée par un chargeur.

Cette disposition permet d'obtenir une autonomie suffisante pour la mécanisation des fonctions envisagées.

Avantageusement, les moyens de fixation de la poignée sont détachables pour fixer ladite poignée à la paroi latérale de manière amovible.

Cette disposition permet d'améliorer le rangement de l'article culinaire et également de faciliter le rechargement de la batterie, la poignée munie de sa batterie pouvant être disposée sur un socle de rechargement, une fois détachée de l'article culinaire.

De préférence, l'article culinaire est une poêle, une casserole, une sauteuse ou un faitout.

L'invention sera mieux comprise à l'étude des modes de réalisation pris à titre nullement limitatif et illustrés dans les figures annexées dans lesquelles :
- La figure 1 illustre une vue schématique partielle en coupe d'un article culinaire et d'un couvercle selon un mode particulier de réalisation de l'invention.
- La figure 2 illustre une vue schématique de la poignée de l'article culinaire suivant la ligne II - II illustré sur la figure 1.
- La figure 3 illustre une vue schématique partielle en coupe de l'article culinaire de la figure 1, le couvercle étant soulevé.
- La figure 4 illustre une vue schématique de la poignée de l'article culinaire suivant la ligne IV - IV illustrée sur la figure 3.
- La figure 5 illustre une vue schématique partielle en coupe d'un article culinaire, d'un couvercle et d'une poignée amovible selon un deuxième mode de réalisation de l'invention. La vue en coupe de la poignée est réalisée suivant la ligne V-V illustrée sur la figure 6.
- La figure 6 illustre une vue en perspective de la poignée amovible de l'article culinaire de la figure 5.
- La figure 7 illustre une vue schématique partielle en coupe de l'article culinaire, du couvercle et de la poignée amovible de la figure 5, le couvercle étant soulevé. La vue en coupe de la poignée est réalisée suivant la ligne VII-VII illustré sur la figure 8.
- La figure 8 illustre une vue en perspective de la poignée amovible de l'article culinaire de la figure 7.
- La figure 9 illustre une vue schématique partielle en coupe d'un article culinaire et d'un couvercle entrainé en rotation selon un troisième mode de réalisation de l'invention.
- La figure 10 illustre une vue schématique de la poignée de l'article culinaire suivant la ligne X - X illustré sur la figure 9.

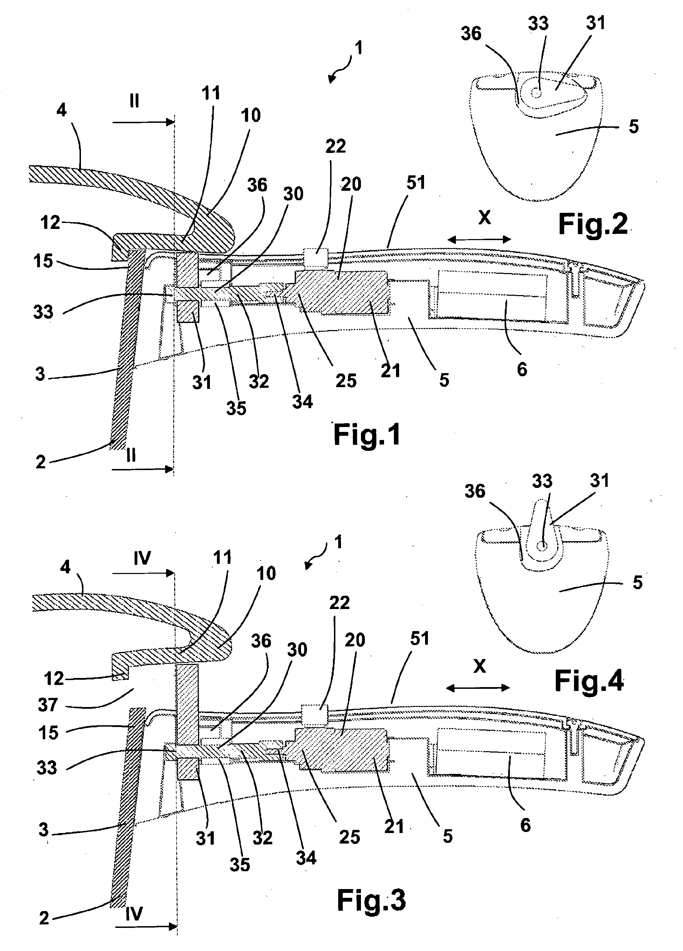

Selon un premier mode de réalisation visible aux figures 1 à 4, un article culinaire 1 comprend une calotte 2 munie d'une paroi latérale 3, un couvercle 4 adapté à recouvrir la calotte 2 et une poignée 5. La poignée 5 est fixée à la paroi latérale 3 par des moyens de fixation (non représentés sur les figures). Les moyens de fixation peuvent comporter un goujon fixé à la calotte qui coopère avec une vis disposée dans une ouverture de la poignée.

La paroi latérale 3 comprend un bord supérieur 15 sur lequel repose le couvercle 4. Le couvercle 4 comporte un rebord 10 extérieur qui s'étend radialement au-delà du bord supérieur 15 et qui est muni d'un retour de matière 11 formant une paroi sensiblement horizontale. Le rebord 10 du couvercle 4 comporte un épaulement 12 de centrage sur le bord supérieur.

La poignée 5 présente une forme allongée et s'étend depuis la paroi latérale 3 selon une direction longitudinale X. La poignée 5 comporte une source d'énergie électrique 6, un dispositif électromécanique 20 alimenté par la source d'énergie électrique 6 et commandé par des moyens de commande ainsi qu'un dispositif d'actionnement 30 entrainé par le dispositif électromécanique 20.

Le dispositif d'actionnement 30 comporte un levier formant une came 31, mobile en rotation et disposée dans l'extrémité avant de la poignée 5, sous le rebord 10 du couvercle 4 lorsque celui-ci repose sur la calotte 2. La came 31 est agencée à une première extrémité 33 d'un arbre 32 guidé en rotation par un palier 35. L'arbre 32 comprend une deuxième extrémité 34 qui est entrainée en rotation par le dispositif électromécanique formé par un moteur électrique 21.

La poignée 5 comporte une face supérieure 51 sous laquelle est agencé un logement 36. La came 31 est logée dans le logement 36 et débouche sur l'extérieur par la face supérieure 51 de la poignée 5. La came 31 est entraînée en rotation par le moteur électrique 21 de façon à être mobile entre une position de repos dans laquelle la came 31 est logée à l'intérieur du logement 36 (Fig 1 et 2) et une position activée dans laquelle la came 31 fait saillie sur la face supérieure 51 de la poignée 5 (Fig 3 et 4). Dans la position de repos, l'axe principal de la came 31 est sensiblement parallèle au plan horizontal de la poignée 5. Dans la position activée, l'axe principal de la came 31 est sensiblement perpendiculaire au plan horizontal de la poignée 5 et orienté vers le haut lorsque la calotte 2 est posée sur un support horizontal.

Dans la position activée, la came 31 prend appui sur le rebord 10 et le couvercle 4 est soulevé dans une position inclinée pour créer un espace 37 par lequel la vapeur peut s'échapper lorsque des aliments sont chauffés dans la calotte 2. La valeur de l'espace 37 en position activée est au maximum de 25 millimètres.

De préférence, la came 31 peut prendre plusieurs positions intermédiaires entre la position de repos et la position activée pour que l'utilisateur puisse adapter l'espace 37 à la quantité de vapeur produite.

De préférence, le moteur électrique 21 comprend un réducteur 25. Par exemple, la vitesse de rotation du moteur électrique est adaptée pour faire passer la came de la position de repos à la position activée soit 90° en deux secondes. La puissance du moteur peut être d'environ deux Watts.

La source d'énergie électrique 6 peut comprendre une source d'énergie électrique rechargeable (accumulateur ou super capacité) ou une ou plusieurs piles. Par exemple, l'accumulateur peut présenter une tension de 3,6 Volt et une intensité de 780 milliampères heure. La source d'énergie électrique 6 peut être amovible pour être rechargée par un chargeur indépendant de l'article culinaire 1.

De préférence, la came 31 est disposée à l'extrémité avant de la poignée 5 et la source d'énergie électrique 6 est disposée à proximité de l'extrémité arrière de la poignée 5. Les moyens de commande, le dispositif électromécanique 20 et le dispositif d'actionnement 30 sont disposés entre la came 31 et la source d'énergie électrique 6. Le dispositif électromécanique 20, le dispositif d'actionnement 30 et la source d'énergie électrique 6 sont sensiblement alignés suivant la direction longitudinale (X) fournissant une poignée 5 compacte de forme suffisamment allongée pour permettre sa préhension par un utilisateur pour soulever l'article culinaire 1.

Les moyens de commande comprennent un bouton de commande 22 accessible depuis l'extérieur de la poignée 5 et un circuit électronique (non représenté) relié au bouton de commande 22 et au dispositif électromécanique 20. Dans l'exemple des figures 1 et 3, le bouton de commande 22 est disposé sur la poignée 5. Lorsque l'utilisateur actionne le bouton de commande 22, un signal est transmis au circuit électronique qui commande la rotation du moteur électrique 21.

Le bouton de commande 22 comporte 3 positions : une position stable de repos, une position basculée vers l'avant pour sélectionner un premier sens de rotation du moteur électrique 21 dédié à l'ouverture du couvercle 4 et un deuxième sens de rotation opposé dédié à la fermeture du couvercle 4.

En fonctionnement, l'utilisateur place des aliments à cuire dans l'article culinaire 1 et pour réaliser la cuisson, il place l'article culinaire 1 sur une source de chauffe. Il saisit le couvercle 4 et positionne le rebord 10 extérieur sur le bord supérieur 15. La came 31 est en position de repos dans la poignée 5. Une fois la cuisson des aliments démarrée, lorsque l'utilisateur souhaite libérer de la vapeur, il actionne le moteur électrique 21 en appuyant sur le bouton de commande 22. Ainsi, la came 31 est mise en rotation et prend appui sur le rebord 10 pour soulever le couvercle 4. Un espace 37 est crée par lequel la vapeur peut s'échapper. En fonction de l'avancement de la cuisson et du réglage de la source de chauffe, l'utilisateur peut moduler l'échappement de la vapeur en ajustant la position de la came 31 entre la position activée dans laquelle l'espace 37 est maximum et la position de repos dans laquelle l'espace 37 est minimum.

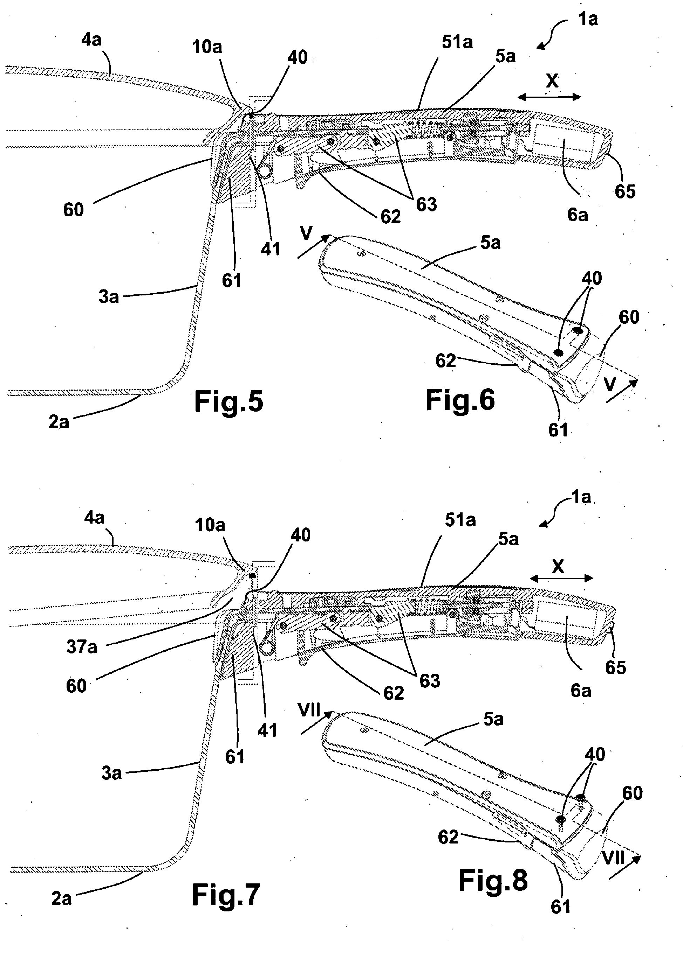

Dans un mode de réalisation illustrée aux figures 5 à 8, un article culinaire 1a comprend une calotte 2a munie d'une paroi latérale 3a, un couvercle 4a adapté à recouvrir la calotte 2a et une poignée 5a. La poignée 5a comporte des moyens de fixation détachables pour fixer ladite poignée 5a à la paroi latérale 3a de manière amovible. Les moyens de fixation comprennent deux mors 60, 61 formant pince dont un mors 60 est mobile en translation par rapport à l'autre mors 61 entre une position ouverte et une position fermée dans laquelle les deux mors 60, 61 formant pince pincent la paroi latérale 3a de l'article culinaire 1 a. Les moyens de fixation comprennent également des moyens de déplacement adaptés à déplacer les mors 60, 61 formant pince entre la position ouverte et la position fermée. Les moyens de déplacement comprennent un levier 62 monté en pivotement sur la poignée 5a entre une position écartée et une position escamotée à l'intérieur de la poignée 5a. Un ensemble de bielles 63 est adapté à déplacer le mors 60 mobile en translation lorsque le levier 62 est pivoté manuellement par l'utilisateur. Une telle poignée amovible est décrite plus en détail dans le document FR 2 898 031.

Dans ce mode de réalisation, la poignée 5a comprend un dispositif d'actionnement 30a permettant également de soulever le couvercle 4a posé sur la calotte 2a. Le dispositif d'actionnement 30a comprend un levier formé par deux pistons 40 actionnés chacun par un moteur 41. Le moteur 41 comporte un système vis/écrou (non illustré sur les figures). L'écrou est entrainé en rotation et agit à l'aide de la vis sur le piston 40. Ces moteurs 41 sont alimentés par une source d'énergie 6a logée dans un corps de préhension 50a de la poignée 5a. Les pistons 40 sont mobiles en translation suivant une direction perpendiculaire à la direction longitudinale (X) entre une position de repos (Fig. 5 et 6) dans laquelle ils sont rentrés (complètement ou quasiment) dans le corps de préhension 50a et une position activée (Fig. 7 et 8) dans laquelle ils font saillie sur la face supérieure 51a de la poignée et sensiblement perpendiculairement à cette dernière. Les pistons 40 sont alignés le long du bord avant du dispositif de préhension suivant une direction perpendiculaire à la direction longitudinale (X). La poignée 5a pince la paroi latérale 3a de la calotte 2a par le dessus de la paroi latérale. Comme représenté sur la figure 5, lorsque les pistons 40 sont en position de repos (rétractés), le couvercle 4a est conformé pour reposer sur les pistons 40 et recouvrir le mors mobile 60 de façon à laisser le moins d'espace entre le couvercle 4a et la poignée 5a. Le couvercle 4a comprend un rebord 10a d'appui sur sa périphérie externe sur lequel viennent s'appuyer les pistons 40. Lorsque les pistons 40 sont en position activée (Fig. 7 et 8), ces derniers sont en contact avec le rebord 10a d'appui du couvercle 4a et repoussent ce dernier vers le haut de façon à former un espace 37a entre le couvercle 4a et le mors mobile 60 de la poignée 5a. Un espace 37a est ainsi formé entre le couvercle 4a et le rebord supérieur de la calotte 2a pour laisser passer la vapeur.

Dans une variante, les pistons peuvent être entrainés par un électroaimant, notamment un électroaimant de type « Push » comprenant un corps cylindrique et une bobine qui met en mouvement une tige métallique.

Dans le cas de l'utilisation d'une source d'énergie électrique rechargeable, la poignée 5a comprend des moyens de connexion électrique accessibles depuis l'extérieur de la poignée pour permettre le rechargement en courant de la source d'énergie électrique 6a rechargeable. Les moyens de connexion électrique peuvent comprendre deux bornes de connexion électrique 65 reliées à la source d'énergie électrique 6a rechargeable. Les bornes de connexion électrique 65 sont connectables de façon amovible à deux bornes de connexion électrique prévues sur une base de rechargement pour permettre le rechargement de la source d'énergie électrique 6 en courant électrique. Les bornes de connexion électrique 65 sont disposées à l'arrière de la poignée 5a.

Dans une variante, les moyens de commande comportent des moyens de détection de la présence de vapeur dans la calotte pour commander le dispositif d'actionnement. Cette variante permet d'automatiser la fonction échappement de la vapeur et ainsi d'alléger la surveillance de la cuisson d'aliments dans l'article culinaire. Par exemple, le risque de débordement peut être évité dans le cas de la cuisson de pâtes en cas de défaut de surveillance lors de l'ébullition. Par exemple, les moyens de détection peuvent comporter un capteur de température qui détecte l'ébullition de l'eau, un capteur optique ou un capteur électrique muni d'électrodes capacitives.

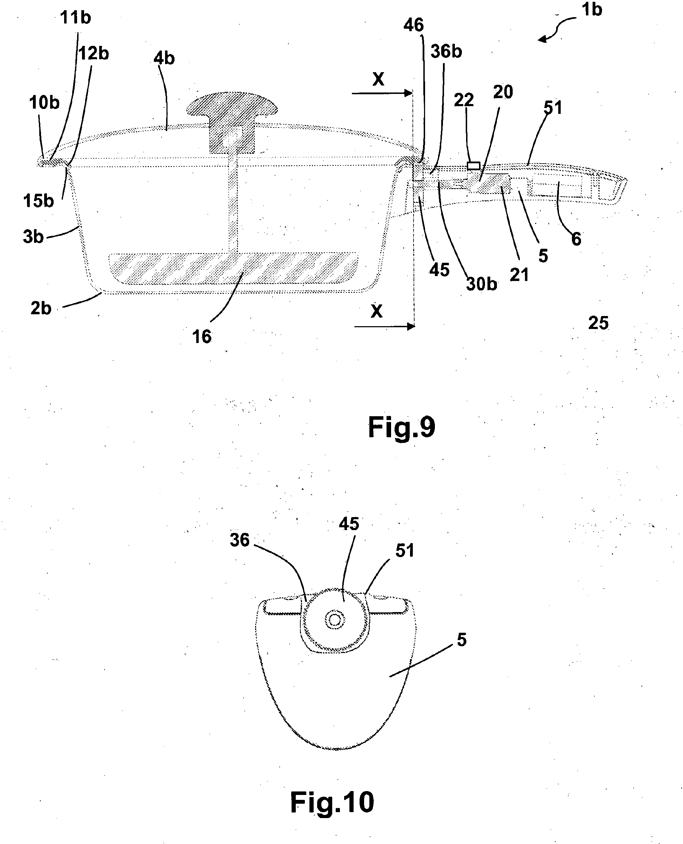

Selon un autre mode de réalisation visible aux figures 9 et 10, un article culinaire 1 b comprend une calotte 2b munie d'une paroi latérale 3b, un couvercle 4b adapté à recouvrir la calotte 2b et la poignée 5. La paroi latérale 3b comprend un bord supérieur 15b sur lequel repose le couvercle 4b. Le couvercle 4b comporte un rebord 10b extérieur qui s'étend radialement au-delà du bord supérieur 15b et qui est muni d'un retour de matière11b formant une paroi sensiblement horizontale. Le rebord 10b du couvercle 4b comporte un épaulement 12b de centrage sur le bord supérieur

Un dispositif d'actionnement 30b comporte une roue dentée 45 entrainée en rotation par le dispositif électromécanique 20. La roue dentée 45 est disposée dans l'extrémité avant de la poignée 5, sous le rebord 10b du couvercle 4 b lorsque celui-ci repose sur la calotte 2b.

La roue dentée 45 est solidaire de l'extrémité avant de l'arbre. La roue dentée est logée dans un logement 36b prévu dans la poignée 5. Le logement 36b débouche sur l'extérieur par la face supérieure 51 de la poignée 5. La roue dentée 45 fait partiellement saillie sur la face supérieure 51 et est entraînée en rotation par le moteur électrique 21 de façon à entraîner une crémaillère 46 disposée sur le rebord 10b du couvercle 4b. La crémaillère 46 entraîne en rotation le couvercle 4b sur la calotte 2b. L'épaulement 12b permet de guider le couvercle 4b sur le bord supérieur 15b. Par exemple, la vitesse de rotation du moteur est adaptée pour entrainer le couvercle à une vitesse d'environ quinze tours par minute. La vitesse de rotation du couvercle peut être réglable.

En variante, la crémaillère 46 et l'épaulement 12b sont réalisés en une seule pièce par injection dans une matière plastique pour favoriser le glissement et réduire l'usure du couvercle 4b sur la paroi latérale 3b. La matière plastique est également résistante à la température et peut être notamment un polyamide, un polytétrafluoroéthylène ou un polysulfone. Cette pièce peut être amovible pour permettre son changement.

Le couvercle 4b comporte une pale 16 permettant de brasser des aliments (purée, poêlée de légume, soupe par exemple) disposés dans le fond de la calotte 2b. La pâle 16 peut être assemblée sur le couvercle par des moyens de fixation permettant à l'utilisateur de démonter la pale par exemple pour faciliter le lavage. La pale peut être pliable et rabattable dans le couvercle. La pale peut prendre différentes formes suivant la préparation à réaliser. Par exemple, la pale comporte une paroi verticale pleine munie d'un retour de matière en partie inférieure pour retourner les aliments dans le cas d'un brassage ou la pale présente une paroi ajourée pour les sauces et les soupes.

Dans une variante de réalisation, le couvercle comporte des moyens de broyage des aliments Les moyens de broyage peuvent comporter une pale perforée disposée de manière inclinée par rapport au fond de la calotte, dans les aliments. Dans ce mode de réalisation, le couvercle comporte des moyens de maintien sur la calotte, autorisant uniquement la rotation.

Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Ainsi, dans une variante de réalisation, le couvercle 4 comporte une partie transparente pour permettre à l'utilisateur de surveiller la cuisson sans toucher au couvercle.

## Revendications

1. Article culinaire (1, 1a, 1b) comportant une calotte (2, 2a, 2b) munie d'une paroi latérale (3, 3a, 3b), un couvercle (4, 4a, 4b) adapté à recouvrir la calotte (2, 2a, 2b) et une poignée (5, 5a) comprenant des moyens de fixation pour la fixer à la paroi latérale (3, 3a, 3b), ladite poignée (5, 5a) comportant une source d'énergie électrique (6, 6a), un dispositif électromécanique (20, 20a) alimenté par la source d'énergie électrique (6, 6a) et commandé par des moyens de commande et le dispositif électromécanique - (20, 20a) étant adapté à entrainer un dispositif d'actionnement (30, 30a, 30b) qui agit sur le couvercle (4, 4a, 4b) pour le déplacer **caractérisé en ce que** le dispositif d'actionnement (30, 30a) comporte un levier mobile entre une position de repos dans laquelle le levier est à l'intérieur de la poignée (5, 5a) et une position activée dans laquelle le levier fait saillie sur une face supérieure (51, 51 a) de la poignée (5, 5a) pour soulever le couvercle (4, 4a) posé sur la calotte (2, 2a) et, ainsi, régler le débit de vapeur lorsque des aliments sont chauffés dans la calotte (2, 2a).

2. Article culinaire (1) selon la revendication 1, **caractérisé en ce que** le levier est formé par une came (31), mobile en rotation.

3. Article culinaire (1 a) selon la revendication 2, **caractérisé en ce que** le levier est formé par au moins un piston (40), mobile en translation.

4. Article culinaire (1, 1 a, 1 b) selon l'une des revendications 1 à 3, **caractérisé en ce que** le dispositif électromécanique (20, 20a) comporte un moteur (21, 41) pour entrainer le dispositif d'actionnement (30, 30a, 30b).

5. Article culinaire (1, 1 a, 1 b) selon l'une des revendications 1 à 4, **caractérisé en ce que** la source d'énergie électrique (6, 6a) est une source d'énergie électrique rechargeable, adaptée à être rechargée par un chargeur.

6. Article culinaire (1 a) selon l'une des revendications 1 à 5, **caractérisé en ce que** les moyens de fixation de la poignée (5a) sont détachables pour fixer ladite poignée (5a) à la paroi latérale (3a) de manière amovible.

7. Article culinaire (1, 1 a, 1 b) selon l'une des revendications 1 à 6, **caractérisé en ce qu'**il est une poêle, une casserole, une sauteuse ou un faitout.

## Patentansprüche

1. Kochgeschirr (1, 1 a, 1 b) mit einer Kalotte (2, 2a, 2b), die eine Seitenwand (3, 3a, 3b), einen Deckel (4, 4a, 4b) zur Abdeckung der Kalotte (2, 2a, 2b) und einen Griff (5, 5a) mit Befestigungsmitteln zu seiner Befestigung an der Seitenwand (3, 3a, 3b) aufweist, wobei der genannte Griff (5, 5a) eine Quelle elektrischer Energie (6, 6a) und eine von der Quelle elektrischer Energie (6, 6a) versorgte und von Steuerungsmitteln gesteuerte elektromechanische Vorrichtung (20, 20a) umfasst und die elektromechanische Vorrichtung (20, 20a) für den Antrieb einer Betätigungsvorrichtung (30, 30a, 30b) tauglich ist, die derart auf den Deckel (4, 4a, 4b) wirkt, dass sie ihn bewegt, **dadurch gekennzeichnet, dass** die Betätigungsvorrichtung (30, 30a) einen Hebel umfasst, der zwischen einer Ruhestellung, in der sich der Hebel im Innern des Griffs (5, 5a) befindet, und einer aktivierten Stellung, in der der Hebel aus einer Oberseite (51, 51 a) des Griffs (5, 5a) herausragt, beweglich ist, um den auf die Kalotte (2, 2a) gesetzten Deckel (4, 4a) anzuheben, und somit die Dampfmenge zu regeln, wenn Nahrungsmittel in der Kalotte (2, 2a) erhitzt werden.

2. Kochgeschirr (1) nach Anspruch 1, **dadurch gekennzeichnet, dass** der Hebel durch eine drehbare Nocke (31) gebildet wird.

3. Kochgeschirr (1) nach Anspruch 2, **dadurch gekennzeichnet, dass** der Hebel durch zumindest einen verschiebbaren Kolben (40) gebildet wird.

4. Kochgeschirr (1, 1 a, 1 b) nach einem der Ansprüche 1 bis 3, **dadurch gekennzeichnet, dass** die elektromechanische Vorrichtung (20, 20a) einen Motor (21, 41) zum Antrieb der Betätigungsvorrichtung (30, 30a, 30b) umfasst.

5. Kochgeschirr (1, 1 a, 1 b) nach einem der Ansprüche 1 bis 4, **dadurch gekennzeichnet, dass** die Quelle elektrischer Energie (6, 6a) eine wiederaufladbare Quelle elektrischer Energie zum Aufladen durch ein Ladegerät ist.

6. Kochgeschirr (1 a) nach einem der Ansprüche 1 bis 5, **dadurch gekennzeichnet, dass** die Befestigungsmittel des Griffs (5a) zur lösbaren Befestigung des genannten Griffs (5a) an der Seitenwand (3a) abnehmbar sind.

7. Kochgeschirr (1, 1a, 1b) nach einem der Ansprüche 1 bis 6, **dadurch gekennzeichnet, dass** es sich bei dem Kochgeschirr um eine Pfanne, eine Kasserolle, einen Schmortopf oder einen Universalkochtopf handelt.

## Claims

1. Culinary article (1, 1 a, 1 b) having a cap (2, 2a, 2b) provided with a side wall (3, 3a, 3b), a lid (4, 4a, 4b) adapted to cover the cap (2, 2a, 2b) and a handle (5, 5a) comprising means for fastening it to the side wall (3, 3a, 3b), said handle (5, 5a) having an electrical energy source (6, 6a), an electromechanical device (20, 20a) supplied by the electrical energy source (6, 6a) and controlled by the control means and the electromechanical device (20, 20a) being adapted to drive an actuator (30, 30a, 30b) which acts on the lid (4, 4a, 4b) to move it, **characterised in that** the actuator (30, 30a) comprises a lever movable between a rest position in which the lever is inside the handle (5, 5a) and an activated position in which the lever projects out of an upper side (51, 51 a) of the handle (5, 5a) to lift the lid (4, 4a) placed on the cap (2, 2a) and thus adjust the flow of steam when foods are heated in the cap (2, 2a).

2. Culinary article (1) according to claim 1, **characterised in that** the lever is formed by a cam (31), movable in rotation.

3. Culinary article (2) according to claim 2, **characterised in that** the lever is formed by at least one piston (40), movable in translation.

4. Culinary article (1, 1 a, 1 b) according to one of claims 1 to 3, **characterised in that** the electromechanical device (20, 20a) comprises a motor (21, 41) for driving the actuator (30 , 30a, 30b).

5. Culinary article (1, 1 a, 1 b) according to one of claims 1 to 4, **characterised in that** the electrical energy source (6, 6a) is a rechargeable electrical energy source adapted to be recharged by a charger.

6. Culinary article (1a) according to one of claims 1 to 5, **characterised in that** the means for fastening the handle (5a) can be detached to fasten said handle (5a) to the side wall (3a) removably.

7. Culinary article (1, 1 a, 1 b) according to one of claims 1 to 6, **characterised in that** it is a frying pan, a pan, a sauté pan or a stewpot.
